# EUROPÄISCHE PATENTSCHRIFT

(11) **EP 0 633 986 B1**
(45) Veröffentlichungstag und Bekanntmachung des Hinweises auf die Patenterteilung: **08.05.1996**
(21) Anmeldenummer: 93907763.2
(22) Anmeldetag: 30.03.1993
(51) Int. Cl.: F16C 33/20

(54) **GLEITLAGER**
PLAIN BEARING
PALIER LISSE

(30) Priorität: 01.04.1992 DE 4210681
(43) Veröffentlichungstag der Anmeldung: 18.01.1995
(73) Patentinhaber: IGUS SPRITZGUSSTEILE FÜR DIE INDUSTRIE GmbH, D-51147 Köln (DE)
(72) Erfinder: MERGLER, Wolfgang, D-52351 Dülen (DE)
(74) Vertreter: Stachow, E.-W., Prof. Dr.
(86) Internationale Anmeldenummer: DE9300294
(87) Internationale Veröffentlichungsnummer: WO9320364

(56) Entgegenhaltungen:
- EP-A- 0 192 531
- DE-A- 1 525 304
- DE-U- 8 619 907
- FR-A- 2 217 585
- US-A- 4 208 075

## Beschreibung

Die Erfindung betrifft ein Gleitlager, im wesentlichen aus einer Kunststoffhülse bestehend, welches einen voneinander getrennt angeordneten Einpreßbereich und Gleitbereich aufweist, wobei der Gleitbereich einen geringeren Innendurchmesser als der Einpreßbereich aufweist und der Einpreßbereich einen größeren Außendurchmesser als der Gleitbereich aufweist.

Derartige Gleitlager werden hauptsächlich überall dort verwendet, wo gute Gleiteigenschaften bei geräuscharmem Lauf und niedrigem Verschleiß erwünscht sind. Vor allem sind Gleitlager aus Kunststoff korrosionsbeständig, geräuscharm, außerordentlich abriebfest und lassen sich mit Öl, Fett, Emulsionen oder sogar Wasser schmieren. Sie werden in der Regel in Stahlbüchsen oder direkt in den Lagersitz eingepreßt.

Da die für diese Lager verwendeten Kunststoffe, wie z. B. Polyamide, einen ungefähr um eine Zehnerpotenz höheren Wärmeausdehnungskoeffizienten besitzen als Metalle und zudem hygroskopisch sind, ergeben sich beim Einsatz von Kunststoffgleitlagern sehr große Toleranzen. D. h., aufgrund ihrer Hygroskopizität und ihres hohen Wärmeausdehnungskoeffizienten dehnen sich Kunststofflager im Betrieb sehr stark aus. Um ein Festfressen des Lagers zu vermeiden, ist beim Einsatz eines solchen Lagers ein größeres Lagerspiel als bei Gleitlagern aus Metall erforderlich. Insbesondere wo sehr kleine Toleranzen gefordert sind, wird das als sehr nachteilig empfunden.

Ein derartiges Gleitlager ist z. B. aus der US-A-4,208,075 bekannt. Das dort beschriebene Gleitlager ist hauptsächlich für Linearbewegungen ausgelegt. Es besteht aus einer Teflonhülse, die beidseitig segmentartig unterbrochen ist, wobei die einzelnen Segmente abwechselnd nach innen und nach außen hervorstehen. Der Gleitbereich des Lagers wird durch in das Innere der Hülse hineinragende kragenartige Vorsprünge gebildet. Der Einpreßbereich des Lagers bzw. die äußere Fläche der Hülse ist für einen speziell ausgebildeten Lagersitz vorgesehen. Hierzu weisen die äußeren Segmente ebenfalls kragenartig nach außen vorspringende Ansätze auf, die eine Fase des Lagersitzes hintergreifen und dort einrasten. Die nach innen ragenden Vorsprünge erzeugen ein Spiel zwischer der inneren Hülsenfläche und der Welle, und die nach außer ragenden Vorsprünge erzeugen ein Spiel zwischen der Außenfläche der Hülse und dem Lagersitz. Gleitbereich und Einpreßbereich sind radial voneinander getrennt.

Aufgabe der vorliegenden Erfindung ist es, ein Gleitlager aus Kunststoff mit verbesserten Laufeigenschaften zu schaft fen, bei welchem ein viel geringeres Lagerspiel als bei herkömmlichen Kunststoffgleitlagern erforderlich ist.

Die Aufgabe wird erfindungsgemäß dadurch gelöst, daß der Einpreßbereich und der Gleitbereich axial zueinander versetzt und axial voneinander getrennt angeordnet sind, der Einpreßbereich einen in etwa dem Innendurchmesser des Lagersitzes entsprechenden Außendurchmesser aufweist und der Gleitbereich durch sich im wesentlichen in axialer Richtung erstreckende Stege gebildet ist, die auf der Welle aufliegen und in axialer Richtung durchgehend mit einem dünnen flexiblen Film untereinander verbunden sind.

Durch das erfindungsgemäße Gleitlager ist eine nahezu spielfreie Lagerung einer Welle möglich, wobei Einwirkungen von Feuchtigkeit und Temperatur keinerlei Einfluß auf die Laufeigenschaften des Lagers haben. Dies wird durch die Trennung der Halte- und Gleitaufgabe und die segmentartige Unterbrechung des Gleitbereichs erreicht. Durch die segmentartige Unterbrechung des Gleitbereichs kann die Ausdehnung des Lagermaterials aufgrund von Feuchtigkeit und Temperatur kompensiert werden. D. h., Materialausdehnungen in radiale Richtung können sich in Umfangsrichtung des Gleitlagers verteilen. Darüberhinaus ist das erfindungsgemäße Gleitlager wartungsarm, d. h. es ist keinerlei Schmiermittel erforderlich. Vor allem bei Linearbewegungen wird dadurch die Stabilität des Lagers gewährleistet. Durch die durchgehende Verbindung der Stege untereinander mit einem flexiblen dünnen-Film wird bei hohen Belastungen des Lagers zuverlässig das Auseinanderklaffen und das Verwinden der Stege verhindert Zweckmäßigerweise ist der Film derart an die Kanten der Stege angeformt, daß sowohl der innere als auch der äußere Umfang des Gleitbereiches Vertiefungen aufweist. Dadurch ist bei Ausdehnung der Stege in Umfangsrichtung genügend Zwischenraum für ein eventuelles Auffalten des Films vorhanden. Überdies kann Lagerabrieb oder Schmiermittel in den der Welle zugewandten Vertiefungen aufgefangen werden. Bei Gleitlagern aus Kunststoff fällt beim Einlaufen der Welle auf das Lager, bzw. beim Einlaufen des Lagers auf die Welle Abrieb an. Auch Schmutz und Korrosionsbelag der Welle werden in den Vertiefungen aufgefangen, wodurch ein Festfressen der Welle bei spielarmer Lagerung zuverlässig verhindert wird.

Bei größeren Gleitlagern können auch mehrere jeweils voneinander getrennte Einpreßbereiche und Gleitbereiche in verschiedensten Anordnungen vorgesehen sein.

Die Erfindung wird anhand der Zeichnungen beispielsweise veranschaulicht und nachfolgend im einzelnen erläutert.

Es zeigen die:

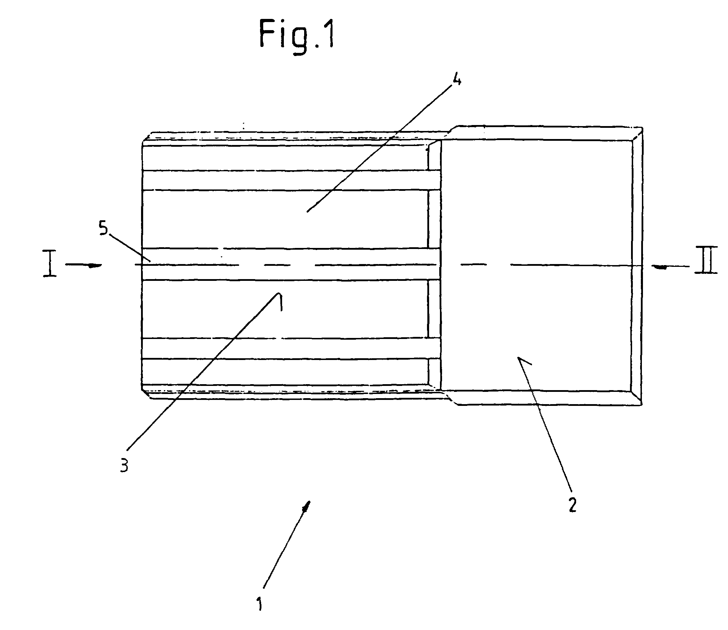

- Fig.1: eine Seitenansicht eines erfindungsgemäßen Gleitlagers;
- Fig.2: eine Draufsicht auf das Gleitlager in Richtung des Pfeils I in Figur 1 und
- Fig.3: eine Draufsicht auf das Gleitlager in Richtung des Pfeils II in Figur 1.

Wie aus der Zeichnung zu ersehen ist, besteht das Gleitlager 1 aus einer Hülse mit zwei unterschiedlichen Bereichen mit verschiedenen Innen- und Außendurchmessern. Der Einpreßbereich 2 hat einen auf einen Lagersitz abgestimmten Außendurchmesser. Nur in diesem Bereich ist das Gleitlager 1 fest in den Lagersitz eingepreßt. Dementsprechend ist der Außendurchmesser des Gleitbereichs 3 kleiner gewählt.

Der Innendurchmesser des Gleitbereichs 3 ist kleiner als der Innendurchmesser des Einpreßbereichs 2, so daß eine in dem Gleitlager 1 laufende Welle nur in dem Gleitbereich 3 gelagert wird. Dadurch ergibt sich, daß die Haltefunktion und die Gleitfunktion zwei unterschiedlichen Bereichen des Gleitlagers 1 zugeordnet sind.

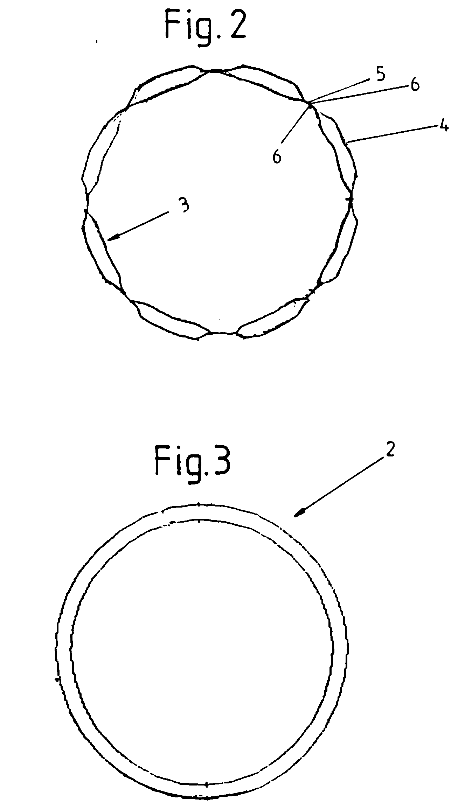

Wie es am Besten aus Figur 2 zu ersehen ist, ist der Gleitbereich 3 durch sich im wesentlichen axial erstreckende Stege 4 unterbrochen. Andere Formen, wie z.B. spiralförmige Unterbrechungen oder z.B. zwei an den äußeren Enden des Lagers angeordnete Einpreßbereiche, sind ebenfalls denkbar. Durch die Unterbrechung des Gleitbereichs 3 in Stege 4 können Materialausdehnungen kompensiert werden. Aus Stabilitätsgründen sind die Stege 4 durchgehend mit flexiblen Filmbrücken 5 untereinander verbunden. Dabei sind die flexiblen Filmbrücken 5 derart mit den Stegen 4 verbunden, daß am inneren und äußeren Umfang des Gleitlagers 1 Vertiefungen 6 entstehen.

### Bezugszeichenliste

1 Gleitlager
2 Einpreßbereich
3 Gleitbereich
4 Stege
5 Filmbrücken
6 Vertiefungen

## Patentansprüche

1. Gleitlager, im wesentlichen aus einer Kunststoffhülse bestehend, welches einen voneinander getrennt angeordneten Einpreßbereich (2) und Gleitbereich (3) aufweist, wobei der Gleitbereich (3) einen geringeren Innendurchmesser als der Einpreßbereich (2) aufweist und der Einpreßbereich (2) einen größeren Außendurchmesser als der Gleitbereich (3) aufweist, **dadurch gekennzeichnet**, daß der Einpreßbereich (2) und der Gleitbereich (3) axial zueinander versetzt und axial voneinander getrennt angeordnet sind, der Einpreßbereich (2) einen in etwa dem Innendurchmesser des Lagersitzes entsprechenden Außendurchmesser aufweist und der Gleitbereich (3) durch sich im wesentlichen in axialer Richtung erstreckende Stege (4) gebildet ist, die auf der Welle aufliegen und in axialer Richtung durchgehend mit einem dünnen flexiblen Film untereinander verbunden sind.

2. Gleitlager nach Anspruch 1, **dadurch gekennzeichnet,** daß der Film derart an die Kanten der Stege angeformt ist, daß sowohl der innere als auch der äußere Umfang des Gleitbereiches (3) Vertiefungen (6) aufweist.

3. Gleitlager nach Anspruch 1 oder 2, **dadurch gekennzeichnet**, daß es mehrere jeweils voneinander getrennte Einpreßbereiche und Gleitbereiche umfaßt.

## Claims

1. Sliding bearing, essentially consisting of a plastic sleeve, which has a separate press-fit area (2) and sliding area (3), where the sliding area (3) has a smaller inside diameter than the press-fit area (2), and the press-fit area (2) has a larger outside diameter than the sliding area (3), characterised in that the press-fit area (2) and the sliding area (3) are offset in the axial direction and axially separated from one another, the press-fit area (2) has an outside diameter roughly equal to the inside diameter of the bearing seat, and the sliding area (3) is formed by webs (4) essentially extending in the axial direction, which rest against the shaft and are interconnected in continuous fashion by a thin, flexible film in the axial direction.

2. Sliding bearing as per Claim 1, characterised in that the film is moulded onto the edges of the webs in such a way that the inner and also outer periphery of the sliding area (3) has indentations (6).

3. Sliding bearing as per Claim 1 or 2, characterised in that it comprises several press-fit areas and sliding areas mutually separated from one another.

## Revendications

1. Palier lisse, constitué essentiellement par une douille en matière plastique qui comporte une partie d'encastrement (2) et une partie de glissement (3) séparées l'une de l'autre, la partie de glissement (3) ayant un diamètre intérieur plus petit que celui de la partie d'encastrement (2) et la partie d'encastrement (2) ayant un diamètre extérieur plus grand que celui de la partie de glissement (3), caractérisé en ce que la partie d'encastrement (2) et la partie de glissement (3) sont décalées axialement l'une par rapport à l'autre et séparées axialement l'une de l'autre, la partie d'encastrement (2) a un diamètre extérieur qui correspond à peu près au diamètre intérieur du logement de palier, et la partie de glissement (3) est constituée par des lames (4) qui s'étendent essentiellement en direction axiale, sont au contact de l'arbre et sont reliées entre elles, de bout en bout en direction axiale, par un film mince flexible.

2. Palier lisse selon la revendication 1, caractérisé en ce que le film est moulé sur les arêtes des lames de sorte qu'il en résulte des creux (6), aussi bien sur le pourtour intérieur que sur le pourtour extérieur de la partie de glissement (3).

3. Palier lisse selon la revendication 1 ou 2, caractérisé en ce qu'il comporte plusieurs parties d'encastrement et plusieurs parties de glissement séparées chaque fois l'une de l' autre.
